# EUROPEAN PATENT SPECIFICATION

(11) **EP 2 994 800 B1**
(45) Date of publication and mention of the grant of the patent: **18.01.2017**
(21) Application number: 13723726.9
(22) Date of filing: 08.05.2013
(51) Int. Cl.: G05B 19/042

(54) **A METHOD FOR PROVIDING PRESENTATION OF TACTILE FEEDBACK, AN INDUSTRIAL ROBOT SYSTEM AND A PORTABLE OPERATOR CONTROL DEVICE**
VERFAHREN ZUR BEREITSTELLUNG EINER DARSTELLUNG EINES TAKTILEN FEEDBACKS, INDUSTRIEROBOTERSYSTEM UND TRAGBARE BEDIENERSTEUERUNGSVORRICHTUNG
PROCÉDÉ DE FOURNITURE DE PRÉSENTATION DE RÉACTION TACTILE, SYSTÈME ROBOTISÉ INDUSTRIEL ET DISPOSITIF DE COMMANDE D'OPÉRATEUR PORTABLE

(43) Date of publication of application: 16.03.2016
(73) Proprietor: ABB Technology Ltd., 8050 Zürich (CH)
(72) Inventor: HEDENFALK, Fredrik, S-723 55 Västerås (SE); FORTELL, Håkan, S-722 46 Västerås (SE)
(74) Representative: Savela, Reino Aleksi
(86) International application number: PCT/EP2013/059580
(87) International publication number: WO 2014/180501

(56) References cited:
- WO-A1-2012/143053
- US-A1- 2006 161 395
- US-A1- 2011 141 052
- US-B2- 7 933 667

## Description

### Technical field of the invention

The present invention relates to a method for providing presentation of tactile feedback in an industrial robot system, an industrial robot system, a portable operator control device, and a computer program product for implementing the method.

### Background

An industrial robot system generally comprises a manipulator movable about a plurality of axes, a robot control unit arranged to control the manipulator, and it may also comprise a portable operator control device. The portable operator control device may be configured to be able to communicate with more than one robot control unit, and a robot control unit may be configured to control more than one manipulator. Generally, the term industrial robot is used for a robot control unit and at least one manipulator which is programmed to carry out work along a predetermined operating path.

In order to program the robot or teach the robot to carry out a work or a work cycle, the manipulator is manually moved to positions along a desired operating path. These positions are stored as instructions in a memory of the robot control unit and a robot program is generated based on these positions. During operation of the robot, the robot program is executed and thereby the manipulator is made to operate as instructed.

Today, online programming of the robot involves teaching the robot an operating path by manually moving the manipulator along the path, by means of a portable user operated client device, generally called a Teach Pendant Unit (TPU). To manually move the manipulator is often called to jog the manipulator. The person operating the TPU is generally called a user or operator.

The TPU includes operator control means, such as a joystick, a ball, a set of buttons, which can be used by the operator to instruct the robot to move. The TPU generally has a control panel and may also include a visual display unit, a touch screen, an enabling device, an emergency stop button, and sometimes a mode-switch device. All these operator control means are possible parts of a user interface.

A robot can generally be operated in at least two modes, manual mode and automatic mode. A choice of operating mode may be made on the control panel on the robot control unit or the control pane! on the TPU. When the robot is in the manual mode, the movements of the robot are controlled by the TPU and when the robot is in automatic mode, the movements of the manipulator are controlled in accordance with the control program running on the robot control unit.

By means of the different operator control means, the TPU may also be used for monitoring the robot program, changing certain variables, starting, stopping and editing the program or switching between different controller modes.

In the following the term portable operator control device is used to designate a TPU or any other type of portable user operated client device having the corresponding functions.

In WO03035335 is disclosed an industrial robot system including a manipulator, a control unit for controlling the manipulator and a TPU for teaching and manually operating the robot, which TPU communicates with the control unit via a data link. The TPU comprises indicating means arranged to indicate a broken data link through tactile feedback by touch perception to the body of an operator carrying the operator control device during operation. A similar TPU device indicating a broken data link through vibrations is also known from US7933667.

In WO2012143053 is disclosed a TPU having a safety function arrangement that may comprise an enabling function or an emergency stop function. The activation of the safety function is controlled by a pressure force sensor on the TPU and upon which a pressure is exerted by a user, and a tactile feedback may be obtained in response to activation of the safety function.

### Summary of the invention

An object of the present invention is to develop the use of tactile feedback as a means of communication between an industrial robot system and ȧ user. This object is achieved by the different inventive aspects disclosed herein.

Accordingly is defined a method for providing presentation of tactile feedback in an industrial robot system, comprising a portable operator control device, at least one manipulator and a robot control unit for controlling the at least one manipulator, said robot control unit comprising a processor and a first communication module for communicating with the operator control device, and said operator control device comprising a processor, a second communication module for communicating with the robot control unit and a presentation device for providing tactile feedback to a user being in physical contact with the operator control device. The method comprises:
- configuring the processor of the operator control device and/or the processor of the robot control unit to enable tactile feedback indication on the presentation device upon the occurrence of a set of events,
- configuring the processor of the operator control device to control the presentation device to provide tactile feedback indication upon the occurrence of a set of events, and/or configuring the processor of the robot control unit to control the operator control device to control the presentation device to provide tactile feedback indication upon the occurrence of a set of events, and
- selecting a subset of events for presentation of tactile feedback indication in the operator control device.

According to the inventive concept is also defined an industrial robot system comprising a portable operator control device, at least one manipulator and a robot control unit for controlling the at least one manipulator, said robot control unit comprising a processor and a first communication module for communicating with the operator control device, said operator control device comprising a processor and a second communication module for communicating with the robot control unit and a presentation device arranged to provide tactile feedback to a user being in physical contact with the operator control device, characterised in that the processor of the operator control device and/or the processor of the robot control unit is arranged to enable presentation of tactile feedback on the presentation device for a set of events, the operator control device and/or the robot control unit comprises a user interface configured for selecting a subset of events from the set of events, and the processor of the operator control device and/or the processor of the robot control unit is arranged to control the presentation device to provide tactile feedback associated with the selected subset of events.

By this method and this industrial robot system is achieved the advantage that the operator/user can actively choose which events that should be the objects of tactile feedback, by means of providing a tactile feedback indication to the operator/user of the portable operator control device. In the prior art, the tactile feedback has only been used as a passive means of communication between the robot system and the operator, in that only a pre-programmed occurrence would result in tactile feedback. Further, in prior art the pre-programmed occurrences initiating tactile feedback has been limited to information about errors and safety functions. However, with the present method and the present industrial robot system the user has the possibility of choosing an event or a number of events that may be any type of event, including events of a simply informative character. For example, the purpose with choosing tactile feedback for a certain event may be just to make the user aware that he should look at the display of the portable operator control device, where more information is presented. The event itself may be any type of event related to an industrial robot system and the parts thereof and which may occur in such a system, e.g. during the operation of such a system or parts thereof.

The tactile feedback as such is presented as a tactile feedback indication, which generally would take the form a vibration of some sort. The tactile feedback indication may thus be a short vibration or a long vibration, a series of long or short vibrations and with different intervals between the vibrations, and combinations thereof.

According to one embodiment, the method may comprise providing the operator control device with at least one presentation device for providing tactile feedback, which at least one presentation device is capable of giving different tactile feedback indications for different events. In a corresponding manner, the industrial robot system may comprise that the presentation device for providing tactile feedback is capable of giving different tactile feedback indications for different events. This has the advantage of making it possible for the user to distinguish between different events simply by experiencing different tactile feedback indications, such as different vibrations.

Alternatively, or as a complement, the corresponding advantage may be obtained in that the method may comprise providing the operator control device with a plurality of presentation devices for providing tactile feedback in order to be capable of giving different tactile feedback indications for different events. In analogy, the industrial robot system may comprise that the operator control device comprises a plurality of presentation devices for providing tactile feedback in order to be capable of giving different tactile feedback indications for different events.

Further, the method may comprise configuring the processor of the operator control device to control the one or more presentation devices for providing tactile feedback to give a different tactile feedback indication dependent upon which event or events that are selected as a subset of events for presentation of tactile feedback. This would entail that each one of the presentation devices should be capable of giving at least one type of tactile feedback indication. In analogy, the industrial robot system may comprise that the processor of the operator control device is configured to control the one or more presentation devices for providing tactile feedback to give a different tactile feedback indication dependent upon which event or events that are selected as said subset of events. This also has the advantage of making it possible for the user to choose different tactile feedback indications for different events in order to distinguish between different events.

Alternatively, or as a complement, the method may comprise configuring the processor of the robot control unit to control the one or more presentation devices for providing tactile feedback to give a different tactile feedback indication dependent upon which event or events that are selected as a subset of events for presentation of tactile feedback. In analogy, the processor of the robot control unit may be configured to control the one or more presentation devices for providing tactile feedback to give a different tactile feedback indication dependent upon which event or events that are selected as said subset of events.

Further, the method may comprise selecting an event related to the movements of the at least one manipulator as said subset of events. Alternatively, or in addition, the method may comprise selecting an event related to a program for the at least one manipulator as said subset of events. The method may also comprise selecting an event related to jogging of the at least one manipulator as said subset of events. In analogy, the industrial robot system may comprise that a set of events is stored in the operator control device and/or the robot control unit and are selectable via the user interface, and the set of events may comprise one or more events related to the movements of the at least one manipulator, and/or one or more events related to a program for the at least one manipulator, and/or one or more events related to jogging of the manipulator. It would also be conceivable to configure the robot control unit and/or the operator control device to provide tactile feedback for events related to movements of the operator control device, and thereby the operator holding the operator control device.

To continue, the method may comprise selecting a dedicated tactile feedback indication for each event in the selected subset of events. In analogy, the user interface may be configured for selecting a dedicated tactile feedback indication for each event in the selected subset of events.

According to another aspect of the invention is defined a portable operator control device for programming and/or teaching and/or manually operating at least one manipulator in an industrial robot system, which operator control device is adapted for reciprocal communication with a robot control unit for controlling the at least one manipulator, and comprises a presentation device for providing tactile feedback to a user when being in physical contact with the operator control device, characterised in that the operator control device is configured to give tactile feedback indication upon the occurrence of one or more events belonging to a subset of events selectable from a set of events. The portable operator control device may comprise a user interface configured for selecting a subset of events that gives rise to tactile feedback indication in the operator control device, from said set of events. It may further comprise that the presentation device for providing tactile feedback is capable of giving different tactile feedback indications for different events, and/or it may comprise a plurality of presentation devices for providing tactile feedback in order to be capable of giving different tactile feedback indications for different events.

Further, the portable operator control device may comprise a processor configured to control the one or more presentation devices for providing tactile feedback to give a different tactile feedback indication dependent upon which event or events that are selected as said subset of events. Alternatively, or in addition, it may be configured to be controlled by the robot control unit for controlling the one or more presentation devices for providing tactile feedback to give a different tactile feedback indication dependent upon which event or events that are selected as said subset of events.

Also, the portable operator control device comprises that the set of events is stored in the operator control device and are selectable via the user interface, and the set of events may comprise one or more events related to the movements of the at least one manipulator, and/or one or more events related to a program for the at least one manipulator, and/or one or more events related to jogging of the at least one manipulator.

In addition, the portable operator control device may have a user interface that is configured for selecting a dedicated tactile feedback indication for each event in the selected subset of events.

The portable operator control device has the same or corresponding advantages as have been described in connection with the method and the industrial robot system.

Finally, in accordance with another aspect is defined a computer program product comprising instructions to be executed by a processor to control an industrial robot system in accordance with the method according to any one of the method claims.

Further features and advantages of the invention will also become apparent from the following detailed description of embodiments.

### Brief description of the drawings

A detailed description of the present invention and embodiments thereof, given as examples only, will now be made with reference to the accompanying drawings, in which:
Fig. 1 shows a block diagram schematically illustrating an industrial robot system according to an embodiment,
Fig. 2 shows a block diagram schematically illustrating an industrial robot according to an embodiment,
Fig. 3 shows a block diagram schematically illustrating a portable operator control device according to an embodiment,
Fig. 4 shows a block diagram illustrating a method, and
Fig. 5 shows a block diagram schematically illustrating a variant of an industrial robot system.

### Detailed description

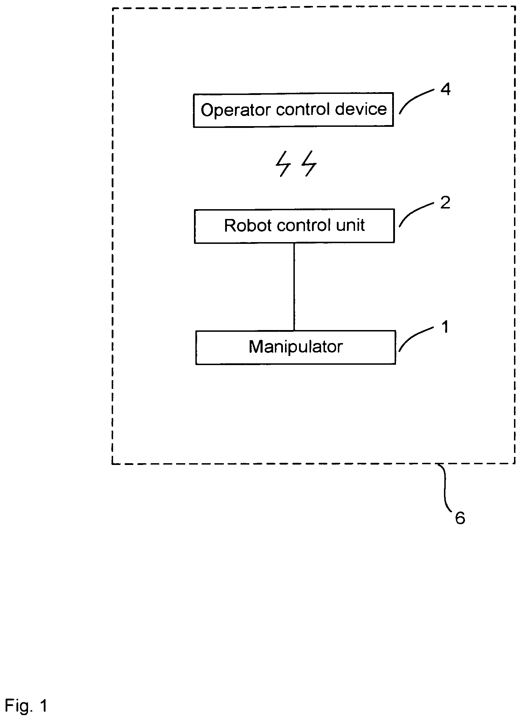

In Fig. 1, a block diagram illustrates an industrial robot system 6 comprising at least one manipulator 1, a robot control unit 2 for controlling the manipulator, and a portable operator control device 4. The robot control unit 2 is arranged to communicate with the operator control device 4. The operator control device is arranged to provide presentation of tactile feedback to a user of the operator control device. Further, the operator control device and/or the robot control unit is arranged to enable presentation of tactile feedback for a set of events. A user can select a subset of events from the set of events via a user interface on the operator control device and/or the robot control unit. The operator control device and/or the robot control unit is arranged to control the presentation to present tactile feedback associated with the selected subset of events.

The robot control unit 2 and the operator control device 4 have been illustrated as having wireless communication, but naturally they may alternatively be configured to communicate via wire/cabling.

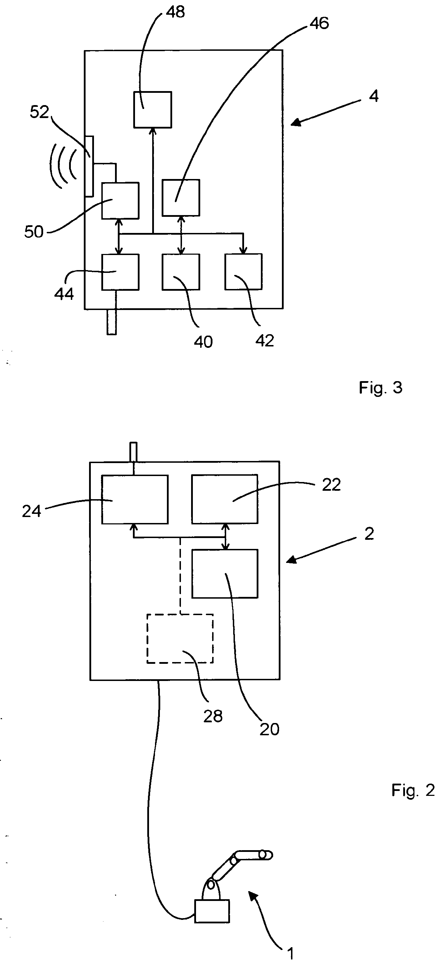

In the block diagram of Fig 2 is shown an embodiment of an industrial robot comprising a robot control unit 2 and a manipulator 1. The robot control unit 2 includes hardware, such as a processor 20, e.g. a CPU, and a data storage module 22, for running a control program that controls the movements of a manipulator connected to the robot control unit 2. The data storage module may be a separate module or integrated in the processor. Control signals from the robot control unit 2 are sent to the manipulator 1 via wire/cabling. The robot control unit further includes a first communication module 24 for communicating with a portable operator control device. The robot control unit is configured to receive jogging commands from the operator control device to control the movements of the manipulator during manual mode, based on received jog commands from the operator control device. It may also receive and send other commands. The expressions jog and jogging are used in accordance with what has been previously explained. The robot control unit 2 may also comprise a user interface 28, as will be further explained below. In addition, the robot control device 2 may comprise the usual safety module comprising enabling and emergency stop functions, authentication module, etc. in accordance with prior art (not shown).

In the block diagram of Fig 3, is shown an embodiment of a portable operator control device 4. The portable operator control device 4 comprises hardware, such as a processor 40, e.g. a CPU, and a data storage module 42. The data storage module may be a separate module or integrated in the processor. The operator control device 4 further includes a second communication module 44 for communicating with the robot control unit 2. The operator control device 4 further comprises a jogging module 46 configured to send jogging commands to a robot control unit in order to control the movements of the manipulator during manual mode. The operator control device 4 also comprises a user interface 48, as will be further explained below. The operator control device 4 further comprises a presentation module 50 including a presentation device 52 for providing tactile feedback to a user. Naturally, it would also be possible to have more than one presentation device. In addition, the operator control unit 4 comprises the usual safety module comprising enabling and emergency stop functions, authentication module, etc. in accordance with prior art (not shown).

The processor 40 of the operator control device 4 is configured to enable presentation of tactile feedback on the presentation device 52 for a set of events, and it is arranged to control the presentation device to provide tactile feedback associated with the selected subset of events. Alternatively, the processor 20 of the robot control unit 2 may be configured to enable presentation of tactile feedback on the presentation device 52, and then to control the presentation device to provide tactile feedback associated with the selected subset of events.

The presentation device 52 is arranged to provide tactile feedback to a user holding the portable operator control unit upon the occurrence of certain events, by giving a tactile feedback indication. The tactile feedback indication is arranged to comprise vibrations of different types, in the form of one vibration or several vibrations of shorter or longer duration, a sequence of vibrations with shorter or longer intervals between each vibration, combinations of vibrations with different intervals there between, etc.

Examples of events that may be of interest for generating a tactile feedback indication are:
- Events related to the movements of the at least one manipulator, such as when the manipulator passes a certain position along the path of movement, which may for example generate an I/O signal,
- Events related to a program controlling the at least one manipulator, such as when the robot control unit enters a predetermined state in the program; I/O signals or system inputs/outputs that today often are shown on a display (e.g. I on the display is changed to O); errors and warnings, entering enabling mode; testing of a program; etc.
- Events related to jogging or programming of the at least one manipulator, such as when the tool centre point of the robot tool enters a predetermined zone, e.g. a work zone; when the manipulator or the tool reaches an end position; when the manipulator runs into something; updating of programmed position e.g. when the manipulator has been moved to a new position that is saved a vibration may be used to confirm that the new position has been saved, etc.

According to the invention, event data defining events that are selectable as possible events for tactile feedback are stored as a set of events in the data storage module 22 of the robot control unit 2 and/or in the data storage module 42 of the operator control device 4. From this set of events, a subset of events is selected for giving tactile feedback. Such a subset may comprise one event or several events, and even all events in the set of events. As an example, event data includes information about an event and the type of action that is triggered, such as when the robot passes a certain position an I/O signal is generated which in turn generates a tactile feedback indication; an error occurs, the robot is stopped and an error message is displayed on the display which generates tactile feedback indication.

Each event may have its own specific tactile feedback indication, or some events may have the same tactile feedback indication. It is of course also possible that the tactile feedback indication is the same no matter what the event is. Further, it is possible that a sequence of combined events result in a tactile feedback indication, but that no tactile feedback is given for any single event that is part of the series.

If the operator control device 4 is provided with more than one presentation device 52 for tactile feedback, different presentation devices may be configured to provide different types of tactile feedback indications, according to the examples given above.

The processor 40 of the operator control device 4 is configured to enable tactile feedback indication on the presentation device 52 upon the occurrence of any event belonging to said set of events. Alternatively, or in addition, the processor 20 of the robot control unit 2 may be configured to enable tactile feedback indication on the presentation device 52 of the operator control device 4 upon the occurrence of any event belonging to said set of events.

Further, the processor 40 of the operator control device 4 is configured to provide tactile feedback indication on the presentation device 52 upon the occurrence of any event belonging to said set of events. Alternatively, or in addition, the processor 20 of the robot control unit 2 is configured to control the operator control device 2 to provide tactile feedback indication upon the occurrence of any event belonging to said set of events.

Configuring of the respective processor may for example be made via a network by means of a separate computer (PC, laptop, tablet computer, panel computer or the like) that can provide the required software and also provide the set of events with event data to the data storage module or alternatively by use of a USB memory or similar portable computer readable medium, or even via the internet such as by a cloud service. Alternatively, the processor 20 of the robot control unit 2 may be configured by use of the operator control device 4.

The robot control unit 2 also has a first communication module 24 in order to be able to communicate with the operator control device 4, which also is provided with a second communication module 44. The robot control unit 2 naturally also has the necessary modules and devices in order to control and communicate with the manipulator, as commonly used in prior art.

The portable operator control device 4 also comprises a user interface 48 which amongst other things is configured such that the user can select a subset of events that he wishes to have tactile feedback for, from the set of events. The user interface may for example comprise a visual display device, a touch screen, a keyboard, a mouse, etc. that makes it possible for the user to communicate with the operator control device and by means of which the user may select the subset of events. Optionally also the robot control unit 2 may be provided with a user interface 28, in order to make it possible to make the selection of the subset of events therefrom.

The user interface may optionally be configured such that it is also possible to select the type of tactile feedback indication that the user wants to have for a selected event. For example, the user may select a longer vibration as a tactile feedback indication for an event in the program related to when the tool centre point enters a work zone, and select a sequence of three short vibrations as a tactile feedback indication when a task to be performed by the manipulator is completed. Thus it is possible to have a dedicated tactile feedback indication for a particular event.

The portable operator control device 4 may for example be the type of portable user operated client device that is generally called a Teach Pendant Unit, TPU, which usually is configured to jog and/or program a manipulator and which has been described above. However, it is not limited to this type of user operated client device. Examples of other possible devices are a tablet computer, smart phone and similar.

In Fig. 3, showing an example of an implementation of the invention, the operator control device 4 is illustrated as comprising a jogging module 46, but it should be noted that this is not required for the inventive idea. However, the present invention is considered to be very useful for implementation in a portable operator control device also comprising a jogging module, since it appears likely that a user would select events that occur during jogging to provide tactile feedback, as indicated above. Therefore, in particular, the invention may be implemented in a portable operator control device that is configured for programming and/or teaching and/or manually operating a manipulator in an industrial robot system.

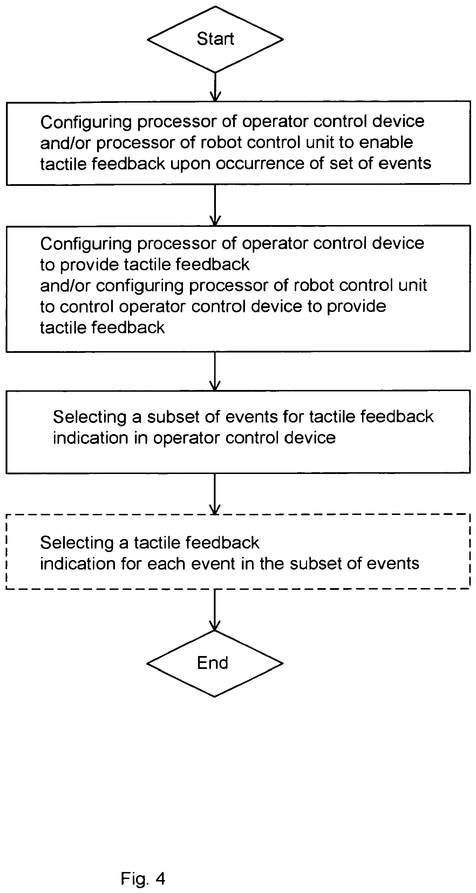

In Fig. 4 is illustrated a method for providing presentation of tactile feedback in an industrial robot system, as described above, which method may be effectuated by instructions in a computer program product performed by a processor. The method comprises:
- configuring the processor 40 of the operator control device 4 and/or the processor 20 of the robot control unit 2 to enable tactile feedback indication on the presentation device 52 upon the occurrence of a set of events,
- configuring the processor 40 of the operator control device 4 to provide tactile feedback indication on the presentation device 52 upon the occurrence of a set of events, and/or configuring the processor 2 of the robot control unit 20 to control the operator control device 4 to provide tactile feedback indication upon the occurrence of a set of events,
- selecting a subset of events for presentation of tactile feedback indication in the operator control device 4, and
- optionally, selecting a dedicated tactile feedback indication for each event in the selected subset of events.

In preparation for the steps above, the method may further comprise providing the operator control device 4 with at least one presentation device 52 for providing tactile feedback , which at least one presentation device is capable of giving different tactile feedback indications for different events. Alternatively, the method may comprise providing the operator control device 4 with a plurality of presentation devices 52 for providing tactile feedback in order to be capable of giving different tactile feedback indications for different events.

Also in preparation, the method may comprise configuring the processor 40 of the operator control device4 to control the one or more presentation devices 52 for providing tactile feedback to give a different tactile feedback indication dependent upon which event or events that are selected as a subset of events for presentation of tactile feedback.

Further, the method may comprise configuring the processor 20 of the robot control unit 2 to control the one or more presentation devices 52 for providing tactile feedback to give a different tactile feedback indication dependent upon which event or events that are selected as a subset of events for presentation of tactile feedback.

The method may also comprise selecting an event related to the movements of the at least one manipulator 1 or of the operator control device 4 as said subset of events, and/or selecting an event related to a program for the at least one manipulator as said subset of events, and/or selecting an event related to jogging of the at least one manipulator as said subset of events.

When jogging of the manipulator is performed, it should be possible to select a subset of events prior to starting the jogging, and/or to make the selection during jogging of the manipulator. In the latter case, a selected event may be an event related to the jogging as such or an event related to a program that is the result of the jogging. It should also be possible to deselect a previously selected event at any time.

From a user perspective, an example of an implementation of the method and industrial robot system may work as follows. First the processor 40 of the operator control device 4 and/or the processor 20 of the robot control unit 2 are configured as described above, including storing of a set of events. Then the user interface 48, e.g. a display screen, on the operator control device will show a set of events that are selectable for tactile feedback. The user holding the operator control device 4 will then select a subset of events for which he would like tactile feedback. Next, in an optional step, the user interface will show different alternatives for tactile feedback indications and the user may then select a specific tactile feedback indication for each event in the selected subset of events. After this, the user may start working with the robot. As an example, the user starts jogging the manipulator 1 by manually moving the manipulator along a path via signals sent from the operator control device 4 to the robot control unit 2, in order to program the manipulator to follow the path in for example a welding operation. The jogging may for example be made by means of a joystick, a touch screen or other similar device forming part of the user interface 48 of the operator control device 4. As an example, the user has selected the following event to give a tactile feedback indication, with the selected tactile feedback indication in parenthesis:
- entering a work area of the manipulator (one long vibration)
- every time the user gives a save command related to a position or an activity (one short vibration)

Once the manipulator has entered the work area of the manipulator, and during the continued jogging of the manipulator, the user selects the following event to give tactile feedback:
- leaving the work area of the manipulator (a repeated series of three short vibrations).

As the user continues to jog the manipulator, he will then get an affirmative tactile feedback indication in the form of a short vibration every time he saves a position on the path or saves an activity, such as when the welding equipment is started, when it is shut off, etc.

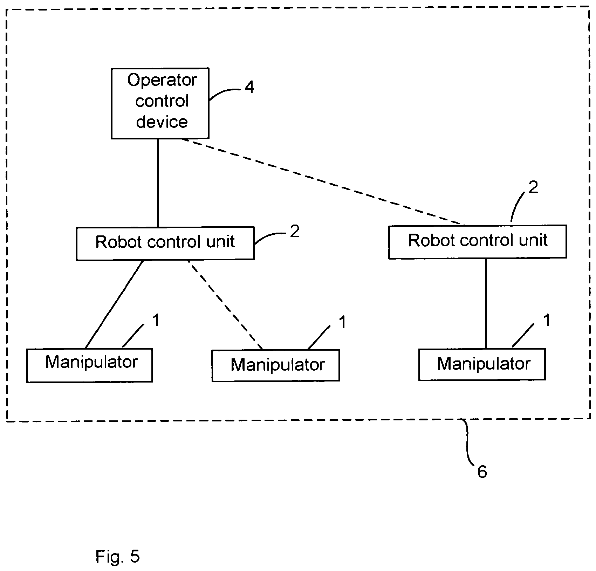

Fig. 5 simply illustrates that an industrial robot system 6 may comprise more than one robot control unit 2 and that each robot control unit 2 may control more than one manipulator 1. Naturally, an industrial robot system may comprise any number of operator control devices 4, robot control units 2 and manipulators 1, in all sorts of combinations.

The invention shall not be considered limited to the illustrated embodiments, but can be modified and altered in many ways, as realised by a person skilled in the art, without departing from the scope defined in the appended claims.

## Claims

1. A method for providing presentation of tactile feedback in an industrial robot system (6) comprising a portable operator control device (4), at least one manipulator (1) and a robot control unit (2) for controlling the at least one manipulator, said robot control unit comprising a processor (20) and a first communication module (24) for communicating with the operator control device, said operator control device comprising a processor (40), a second communication module (44) for communicating with the robot control unit and at least one presentation device (52) for providing tactile feedback to a user being in physical contact with the operator control device (4), wherein the method comprises:
- configuring the processor (40) of the operator control device (4) and/or the processor (20) of the robot control unit (2) to enable tactile feedback indication on the presentation device (52) upon the occurrence of any event belonging to a set of events, which set of events comprises: one or more events related to the movements of the at least one manipulator (1), and/or one or more events related to the movements of the operator control device, and/or one or more events related to a program for the at least one manipulator, and/or one or more events related to jogging or programming of the at least one manipulator,
- configuring the processor (40) of the operator control device (4) to control the presentation device (52) to provide tactile feedback indication upon the occurrence of any event belonging to the set of events, and/or configuring the processor (20) of the robot control unit (2) to control the operator control device (4) to control the presentation device (52) to provide tactile feedback indication upon the occurrence of any event belonging to the set of events,
**characterized in that** the method comprises
- selecting a subset of events from said set of events, from a user interface of the operator control device or the robot control unit, for presentation of tactile feedback indication in the operator control device (4) and wherein the at least one presentation device (52) is configured to be capable of giving different tactile feedback indications for different events.

2. The method according to claim 1, comprising providing the operator control device (4) with a plurality of presentation devices (52) for providing tactile feedback in order to be capable of giving different tactile feedback indications for different events.

3. The method according to claim 1 or 2, comprising configuring the processor (40) of the operator control device (4) to control the one or more presentation devices (52) for providing tactile feedback to give a different tactile feedback indication dependent upon which event or events that are selected as the subset of events for presentation of tactile feedback.

4. The method according to any one of claims 1-2, comprising configuring the processor (20) of the robot control unit (2) to control the operator control device (4) to control the one or more presentation devices (52) for providing tactile feedback to give a different tactile feedback indication dependent upon which event or events that are selected as the subset of events for presentation of tactile feedback.

5. The method according to any one of claims 1-4, comprising selecting a dedicated tactile feedback indication for each event in the selected subset of events.

6. An industrial robot system (6) comprising a portable operator control device (4), at least one manipulator (1) and a robot control unit (2) for controlling the at least one manipulator, said robot control unit (2) comprising a processor (20) and a first communication module (24) for communicating with the operator control device (4), said operator control device (4) comprising a processor (40) and a second communication module (44) for communicating with the robot control unit (2) and at least one presentation device (52) arranged to provide tactile feedback to a user being in physical contact with the operator control device, wherein
- the processor (40) of the operator control device (4) or the processor (20) of the robot control unit (2) is arranged to enable presentation of tactile feedback on the at least one presentation device (52) for any event belonging to a set of events, which set of events comprises: one or more events related to the movements of the at least one manipulator (1), and/or one or more events related to the movements of the operator control device, and/or one or more events related to a program for the at least one manipulator, and/or one or more events related to jogging or programming of the at least one manipulator, **characterised in that**
- the operator control device (4) or the robot control unit (2) comprises a user interface (48; 28) configured for selecting a subset of events, from the set of events, and
- the processor (40) of the operator control device (4) or the processor (20) of the robot control unit (2) is arranged to control the at least one presentation device (52) to provide tactile feedback associated with the selected subset of events, and the at least one presentation device (52) for providing tactile feedback is capable of giving different tactile feedback indications for different events.

7. The industrial robot system according to claim 6, wherein the operator control device (4) comprises a plurality of presentation devices (52) for providing tactile feedback in order to be capable of giving different tactile feedback indications for different events.

8. The industrial robot system according to claim 6 or 7, wherein said processor (40) of the operator control device (4) or said processor (20) of the robot control unit (2) that is arranged to control the at least one presentation device (52) to provide tactile feedback associated with the selected subset of events, is configured to control the one or more presentation devices (52) for providing tactile feedback to give a different tactile feedback indication dependent upon which event or events that are selected as said subset of events.

9. The industrial robot system according to any one of claims 6-8, wherein the set of events is stored in the operator control device (4) and/or the robot control unit (2) and the events are selectable via the respective user interface (28; 48).

10. The industrial robot system according to any one of claims 6-9, wherein the user interface (28; 48) is configured for selecting a dedicated tactile feedback indication for each event in the selected subset of events.

11. A portable operator control device (4) for programming and/or teaching and/or manually operating at least one manipulator (1) in an industrial robot system (6), which operator control device is adapted for reciprocal communication with a robot control unit (2) for controlling the at least one manipulator, and comprises at least one presentation device (52) for providing tactile feedback to a user when being in physical contact with the operator control device (4), **characterised in that** the operator control device is configured to give tactile feedback indication upon the occurrence of one or more events belonging to a subset of events selectable from a set of events, which set of events comprises: one or more events related to the movements of the at least one manipulator (1), and/or one or more events related to the movements of the operator control device, and/or one or more events related to a program for the at least one manipulator, and/or one or more events related to jogging or programming of the at least one manipulator, and of which set of events all events are able to provide tactile feedback, **in that** it comprises a user interface (48) configured for selecting a subset of events that gives rise to tactile feedback indication in the operator control device, from said set of events, and **in that** the at least one presentation device (52) for providing tactile feedback is capable of giving different tactile feedback indications for different events.

12. The portable operator control device according to claim 11, wherein it comprises a plurality of presentation devices (52) for providing tactile feedback in order to be capable of giving different tactile feedback indications for different events.

13. The portable operator control device according to claim 11 or 12, wherein it comprises a processor (40) configured to control the one or more presentation devices (52) for providing tactile feedback to give a different tactile feedback indication dependent upon which event or events that are selected as said subset of events.

14. The portable operator control device according to any one of claims 11-13, wherein it is configured to be controlled by the robot control unit (2) for controlling the one or more presentation devices (52) for providing tactile feedback to give a different tactile feedback indication dependent upon which event or events that are selected as said subset of events.

15. The portable operator control device according to any one of claims 11-13, wherein the set of events is stored in the operator control device (4) and the events are selectable via the user interface (48).

16. The portable operator control device according to any one of claims 11-15, wherein the user interface is configured for selecting a dedicated tactile feedback indication for each event in the selected subset of events.

17. A computer program product comprising instructions to be executed by a processor to control an industrial robot system in accordance with the method according to any one of claims 1-5.

## Patentansprüche

1. Verfahren zum Bereitstellen einer Präsentation einer taktilen Rückkopplung in einem Industrierobotersystem (6), das eine tragbare Bedienersteuervorrichtung (4), wenigstens einen Manipulator (1) und eine Robotersteuereinheit (2) zum Steuern des wenigstens einen Manipulators umfasst, wobei die Robotersteuereinheit einen Prozessor (20) und ein erstes Kommunikationsmodul (24) für die Kommunikation mit der Bedienersteuervorrichtung umfasst, wobei die Bedienersteuervorrichtung einen Prozessor (40), ein zweites Kommunikationsmodul (44) für die Kommunikation mit der Robotersteuereinheit und wenigstens eine Präsentationsvorrichtung (52), um eine taktile Rückkopplung für einen Anwender, der in einem körperlichen Kontakt mit der Bedienersteuervorrichtung (4) ist, bereitzustellen, umfasst, wobei das Verfahren Folgendes umfasst:
- Konfigurieren des Prozessors (40) der Bedienersteuervorrichtung (4) und/oder des Prozessors (20) der Robotersteuereinheit (2), um die Angabe einer taktilen Rückkopplung bei der Präsentationsvorrichtung (52) bei Auftreten irgendeines Ereignisses, das zu einer Gruppe von Ereignissen gehört, zu ermöglichen, wobei die Gruppe von Ereignissen Folgendes umfasst: ein oder mehrere Ereignisse, die mit den Bewegungen des wenigstens einen Manipulators (1) in Beziehung stehen, und/oder ein oder mehrere Ereignisse, die mit den Bewegungen der Bedienersteuervorrichtung in Beziehung stehen, und/oder ein oder mehrere Ereignisse, die mit einem Programm für den wenigstens einen Manipulator in Beziehung stehen, und/oder ein oder mehrere Ereignisse, die mit einem Tippbetrieb oder einer Programmierung des wenigstens einen Manipulators in Beziehung stehen;
- Konfigurieren des Prozessors (40) der Bedienersteuervorrichtung (4), um die Präsentationsvorrichtung (52) zu steuern, um die Angabe einer taktilen Rückkopplung bei Auftreten irgendeines Ereignisses, das zu der Gruppe von Ereignissen gehört, bereitzustellen, und/oder Konfigurieren des Prozessors (20) der Robotersteuereinheit (2), um die Bedienersteuervorrichtung (4) zu steuern, um die Präsentationsvorrichtung (52) zu steuern, um die Angabe einer taktilen Rückkopplung bei Auftreten irgendeines Ereignisses, das zu der Gruppe von Ereignissen gehört, bereitzustellen,
**dadurch gekennzeichnet, dass** das Verfahren Folgendes umfasst:
- Auswählen einer Untergruppe von Ereignissen aus der Gruppe von Ereignissen von einer Anwenderschnittstelle der Bedienersteuervorrichtung oder der Robotersteuereinheit, um die Angabe einer taktilen Rückkopplung in der Bedienersteuervorrichtung (4) zu präsentieren, wobei die wenigstens eine Präsentationsvorrichtung (52) konfiguriert ist, verschiedene Angaben einer taktilen Rückkopplung für verschiedene Ereignisse machen zu können.

2. Verfahren nach Anspruch 1, das das Bereitstellen der Bedienersteuervorrichtung (4) mit mehreren Präsentationsvorrichtungen (52), um eine taktile Rückkopplung bereitzustellen, umfasst, damit sie verschiedene Angaben der taktilen Rückkopplung für verschiedene Ereignisse machen kann.

3. Verfahren nach Anspruch 1 oder 2, das das Konfigurieren des Prozessors (40) der Bedienersteuervorrichtung (4) umfasst, um die eine oder die mehreren Präsentationsvorrichtungen (52) zu steuern, um die taktile Rückkopplung bereitzustellen, um in Abhängigkeit davon, welches Ereignis oder welche Ereignisse für die Untergruppe von Ereignissen für die Präsentation der taktilen Rückkopplung gewählt werden, eine unterschiedliche Angabe der taktilen Rückkopplung zu machen.

4. Verfahren nach einem der Ansprüche 1-2, das das Konfigurieren des Prozessors (20) der Robotersteuereinheit (2) umfasst, um die Bedienersteuervorrichtung (4) zu steuern, um die eine oder die mehreren Präsentationsvorrichtungen (52) für die Bereitstellung einer taktilen Rückkopplung zu steuern, um in Abhängigkeit davon, welches Ereignis oder welche Ereignisse für die Untergruppe von Ereignissen für die Präsentation der taktilen Rückkopplung gewählt werden, eine unterschiedliche Angabe der taktilen Rückkopplung zu machen.

5. Verfahren nach einem der Ansprüche 1-4, das das Auswählen einer dedizierten Angabe der taktilen Rückkopplung für jedes Ereignis in der ausgewählten Untergruppe von Ereignissen umfasst.

6. Industrierobotersystem (6), das eine tragbare Bedienersteuervorrichtung (4), wenigstens einen Manipulator (1) und eine Robotersteuereinheit (2) zum Steuern des wenigstens einen Manipulators umfasst, wobei die Robotersteuereinheit (2) einen Prozessor (20) und ein erstes Kommunikationsmodul (24) für die Kommunikation mit der Bedienersteuervorrichtung (4) umfasst und wobei die Bedienersteuervorrichtung (4) einen Prozessor (40) und ein zweites Kommunikationsmodul (44) für die Kommunikation mit der Robotersteuereinheit (2) und wenigstens eine Präsentationsvorrichtung (52), die dafür ausgelegt ist, eine taktile Rückkopplung für einen Anwender, der mit der Bedienersteuervorrichtung in einem körperlichen Kontakt ist, bereitzustellen, umfasst, wobei
- der Prozessor (40) der Bedienersteuervorrichtung (4) oder der Prozessor (20) der Robotersteuereinheit (2) dafür ausgelegt ist, die Präsentation einer taktilen Rückkopplung bei der wenigstens einen Präsentationsvorrichtung (52) für irgendein Ereignis, das zu einer Gruppe von Ereignissen gehört, zu ermöglichen, wobei die Gruppe von Ereignissen umfasst: ein oder mehrere Ereignisse, die mit den Bewegungen des wenigstens einen Manipulators (1) in Beziehung stehen, und/oder ein oder mehrere Ereignisse, die mit den Bewegungen der Bedienersteuervorrichtung in Beziehung stehen, und/oder ein oder mehrere Ereignisse, die mit einem Programm für den wenigstens einen Manipulator in Beziehung stehen, und/oder ein oder mehrere Ereignisse, die mit einem Tippbetrieb oder einer Programmierung des wenigstens einen Manipulators in Beziehung stehen,
**dadurch gekennzeichnet, dass**
- die Bedienersteuervorrichtung (4) oder die Robotersteuereinheit (2) eine Anwenderschnittstelle (48; 28) umfasst, die konfiguriert ist, eine Untergruppe von Ereignissen aus der Gruppe von Ereignissen auszuwählen und
- der Prozessor (40) der Bedienersteuervorrichtung (4) oder der Prozessor (20) der Robotersteuereinheit (2) dafür ausgelegt ist, die wenigstens eine Präsentationsvorrichtung (52) zu steuern, um eine taktile Rückkopplung bereitzustellen, die der ausgewählten Untergruppe von Ereignissen zugeordnet ist, und die wenigstens eine Präsentationsvorrichtung (52) für die Bereitstellung der taktilen Rückkopplung für verschiedene Ereignisse verschiedene Angaben einer taktilen Rückkopplung machen kann.

7. Industrierobotersystem nach Anspruch 6, wobei die Bedienersteuervorrichtung (4) mehrere Präsentationsvorrichtungen (52) umfasst, um eine taktile Rückkopplung bereitzustellen, damit sie für verschiedene Ereignisse verschiedene Angaben der taktilen Rückkopplung machen kann.

8. Industrierobotersystem nach Anspruch 6 oder 7, wobei der Prozessor (40) der Bedienersteuervorrichtung (4) oder der Prozessor (20) der Robotersteuereinheit (2), die dafür ausgelegt ist, die wenigstens eine Präsentationsvorrichtung (52) zu steuern, damit sie eine der ausgewählten Untergruppe von Ereignissen zugeordnete taktile Rückkopplung bereitstellt, konfiguriert ist, die eine oder die mehreren Präsentationsvorrichtungen (52) für die Bereitstellung einer taktilen Rückkopplung zu steuern, um in Abhängigkeit davon, welches Ereignis oder welche Ereignisse als die Untergruppe von Ereignissen gewählt werden, eine unterschiedliche Angabe einer taktilen Rückkopplung zu machen.

9. Industrierobotersystem nach einem der Ansprüche 6-8, wobei die Gruppe von Ereignissen in der Bedienersteuervorrichtung (4) und/oder in der Robotersteuereinheit (2) gespeichert ist und die Ereignisse über die jeweilige Anwenderschnittstelle (28; 48) auswählbar sind.

10. Industrierobotersystem nach einem der Ansprüche 6-9, wobei die Anwenderschnittstelle (28; 48) konfiguriert ist, eine dedizierte Angabe der taktilen Rückkopplung für jedes Ereignis in der ausgewählten Untergruppe von Ereignissen auszuwählen.

11. Tragbare Bedienersteuervorrichtung (4) zum Programmieren und/oder Anlernen und/oder manuellen Betreiben wenigstens eines Manipulators (1) in einem Industrierobotersystem (6), wobei die Bedienersteuervorrichtung dafür ausgelegt ist, eine wechselseitige Kommunikation mit einer Robotersteuereinheit (2) auszuführen, um den wenigstens einen Manipulator zu steuern, und wenigstens eine Präsentationsvorrichtung (52) umfasst, um eine taktile Rückkopplung für einen Anwender bereitzustellen, wenn er mit der Bedienersteuervorrichtung (4) in einem körperlichen Kontakt ist,
**dadurch gekennzeichnet, dass** die Bedienersteuervorrichtung konfiguriert ist, bei Auftreten eines oder mehrerer Ereignisse, die zu einer Untergruppe von Ereignissen gehören, die aus einer Gruppe von Ereignissen auswählbar ist, eine Angabe einer taktilen Rückkopplung zu machen, wobei die Gruppe von Ereignissen Folgendes umfasst: ein oder mehrere Ereignisse, die mit den Bewegungen des wenigstens einen Manipulators (1) in Beziehung stehen, und/oder ein oder mehrere Ereignisse, die mit den Bewegungen der Bedienersteuervorrichtung in Beziehung stehen, und/oder ein oder mehrere Ereignisse, die mit einem Programm für den wenigstens einen Manipulator in Beziehung stehen, und/oder ein oder mehrere Ereignisse, die mit einem Tippbetrieb oder einer Programmierung des wenigstens einen Manipulators in Beziehung stehen, wobei alle Ereignisse dieser Gruppe von Ereignissen eine taktile Rückkopplung bereitstellen können, dass sie eine Anwenderschnittstelle (48) umfasst, die konfiguriert ist, eine Untergruppe von Ereignissen, die Anlass für die Angabe einer taktilen Rückkopplung in der Bedienersteuervorrichtung ist, aus der Gruppe von Ereignissen auszuwählen, und dass die wenigstens eine Präsentationsvorrichtung (52) zum Bereitstellen der taktilen Rückkopplung für verschiedene Ereignisse verschiedene Angaben der taktilen Rückkopplung machen kann.

12. Tragbare Bedienersteuervorrichtung nach Anspruch 11, die mehrere Präsentationsvorrichtungen (52) zur Bereitstellung einer taktilen Rückkopplung umfasst, um für verschiedene Ereignisse verschiedene Angaben der taktilen Rückkopplung machen zu können.

13. Tragbare Bedienersteuervorrichtung nach Anspruch 11 oder 12, die einen Prozessor (40) umfasst, der konfiguriert ist, die eine oder die mehreren Präsentationsvorrichtungen (52) zur Bereitstellung der taktilen Rückkopplung zu steuern, damit sie in Abhängigkeit davon, welches Ereignis oder welche Ereignisse als die Untergruppe von Ereignissen gewählt werden, eine unterschiedliche Angabe einer taktilen Rückkopplung machen.

14. Tragbare Bedienersteuervorrichtung nach einem der Ansprüche 11-13, die konfiguriert ist, durch die Robotersteuereinheit (2) gesteuert zu werden, um die eine oder die mehreren Präsentationsvorrichtungen (52) zur Bereitstellung einer taktilen Rückkopplung zu steuern, damit sie in Abhängigkeit davon, welches Ereignis oder welche Ereignisse als die Untergruppe von Ereignissen gewählt werden, eine unterschiedliche Angabe der taktilen Rückkopplung machen.

15. Tragbare Bedienersteuervorrichtung nach einem der Ansprüche 11-13, wobei die Gruppe von Ereignissen in der Bedienersteuervorrichtung (4) gespeichert ist und die Ereignisse über die Anwenderschnittstelle (48) auswählbar sind.

16. Tragbare Bedienersteuervorrichtung nach einem der Ansprüche 11-15, wobei die Anwenderschnittstelle konfiguriert ist, eine dedizierte Angabe der taktilen Rückkopplung für jedes Ereignis in der ausgewählten Untergruppe von Ereignissen auszuwählen.

17. Computerprogrammprodukt, das Befehle enthält, die durch einen Prozessor abzuarbeiten sind, um ein Industrierobotersystem in Übereinstimmung mit den Verfahren nach einem der Ansprüche 1-5 zu steuern.

## Revendications

1. Procédé permettant de fournir une présentation de rétroaction tactile dans un système robotisé industriel (6) comprenant un dispositif de commande d'opérateur portable (4), au moins un manipulateur (1) et une unité de commande robotisée (2) destinée à commander ledit manipulateur, ladite unité de commande robotisée comportant un processeur (20) et un premier module de communication (24) pour communiquer avec le dispositif de commande d'opérateur, ledit dispositif de commande d'opérateur comportant un processeur (40), un deuxième module de communication (44) destiné à communiquer avec l'unité de commande robotisée et au moins un dispositif de présentation (52) permettant de fournir une rétroaction tactile à un utilisateur en contact physique avec le dispositif de commande d'opérateur (4), le procédé comprenant les étapes suivantes :
- configurer le processeur (40) du dispositif de commande d'opérateur (4) et/ou le processeur (20) de l'unité de commande robotisée (2) pour permettre une indication de rétroaction tactile sur le dispositif de présentation (52) lors de l'apparition d'un événement appartenant à une série d'événements, laquelle série d'événements comportant : un ou plusieurs événements associés aux mouvements dudit manipulateur (1), et/ou un ou plusieurs événements associés aux mouvements du dispositif de commande d'opérateur, et/ou un ou plusieurs événements associés à un programme pour ledit manipulateur, et/ou un ou plusieurs événements associés à l'avance ou à la programmation dudit manipulateur,
- configurer le processeur (40) du dispositif de commande d'opérateur (4) pour commander le dispositif de présentation (52) de manière à fournir une indication de rétroaction tactile lors de l'apparition d'un événement appartenant à la série d'événements, et/ou configurer le processeur (20) de l'unité de commande robotisée (2) pour commander le dispositif de commande d'opérateur (4) afin de commander le dispositif de présentation (52) de manière à fournir une indication de rétroaction tactile lors de l'apparition d'un événement appartenant à la série d'événements,
**caractérisé en ce que** le procédé comprend :
- sélectionner un sous-ensemble d'événements à partir de ladite série d'événements, depuis une interface utilisateur du dispositif de commande d'opérateur ou de l'unité de commande robotisée, pour une présentation d'indication de rétroaction tactile dans le dispositif de commande d'opérateur (4) et ledit dispositif de présentation (52) étant configuré pour pouvoir donner différentes indications de rétroaction tactile pour différents événements.

2. Procédé selon la revendication 1, comprenant :
fournir au dispositif de commande d'opérateur (4) une pluralité de dispositifs de présentation (52) permettant de fournir une rétroaction tactile afin de pouvoir donner différentes indications de rétroaction tactile pour différents événements.

3. Procédé selon la revendication 1 ou 2, comprenant : configurer le processeur (40) du dispositif de commande d'opérateur (4) pour commander les un ou plusieurs dispositifs de présentation (52) afin de fournir une rétroaction tactile donnant une indication de rétroaction tactile différente en fonction de l'événement ou des événements qui sont sélectionnés comme le sous-ensemble d'événements pour une présentation de rétroaction tactile.

4. Procédé selon l'une quelconque des revendications 1-2, comprenant : configurer le processeur (20) de l'unité de commande robotisée (2) pour commander le dispositif de commande d'opérateur (4) afin de commander les un ou plusieurs dispositifs de présentation (52) de manière à fournir une rétroaction tactile donnant une indication de rétroaction tactile différente en fonction de l'événement ou des événements qui sont sélectionnés comme le sous-ensemble d'événements pour une présentation de rétroaction tactile.

5. Procédé selon l'une quelconque des revendications 1-4, comprenant : sélectionner une indication de rétroaction tactile dédiée pour chaque événement dans le sous-ensemble sélectionné d'événements.

6. Système robotisé industriel (6) comprenant un dispositif de commande d'opérateur portable (4), au moins un manipulateur (1) et une unité de commande robotisée (2) permettant de commander ledit manipulateur, ladite unité de commande robotisée (2) comportant un processeur (20) et un premier module de communication (24) permettant de communiquer avec le dispositif de commande d'opérateur (4), ledit dispositif de commande d'opérateur (4) comportant un processeur (40) et un deuxième module de communication (44) destiné à communiquer avec l'unité de commande robotisée (2) et au moins un dispositif de présentation (52) conçu pour fournir une rétroaction tactile à un utilisateur en contact physique avec le dispositif de commande d'opérateur,
- le processeur (40) du dispositif de commande d'opérateur (4) ou le processeur (20) de l'unité de commande robotisée (2) étant conçu pour offrir une présentation de rétroaction tactile sur ledit dispositif de présentation (52) pour un événement appartenant à une série d'événements, laquelle série d'événements comprenant : un ou plusieurs événements associés aux mouvements dudit manipulateur (1), et/ou un ou plusieurs événements associés aux mouvements du dispositif de commande d'opérateur, et/ou un ou plusieurs événements associés à un programme pour ledit manipulateur, et/ou un ou plusieurs événements associés à l'avance ou à la programmation dudit manipulateur,
**caractérisé en ce que**
- le dispositif de commande d'opérateur (4) ou l'unité de commande robotisée (2) comporte une interface utilisateur (48 ; 28) configurée pour sélectionner un sous-ensemble d'événements, à partir de la série d'événements, et
- le processeur (40) du dispositif de commande d'opérateur (4) ou le processeur (20) de l'unité de commande robotisée (2) est conçu pour commander ledit dispositif de présentation (52) de manière à fournir une rétroaction tactile associée au sous-ensemble sélectionné d'événements, et ledit dispositif de présentation (52) destiné à fournir une rétroaction tactile peut donner différentes indications de rétroaction tactile pour différents événements.

7. Système robotisé industriel selon la revendication 6, dans lequel le dispositif de commande d'opérateur (4) comprend une pluralité de dispositifs de présentation (52) permettant de fournir une rétroaction tactile afin de pouvoir donner différentes indications de rétroaction tactile pour différents événements.

8. Système robotisé industriel selon la revendication 6 ou 7, dans lequel ledit processeur (40) du dispositif de commande d'opérateur (4) ou ledit processeur (20) de l'unité de commande robotisée (2) qui est conçue pour commander ledit dispositif de présentation (52) afin de fournir une rétroaction tactile associée au sous-ensemble sélectionné d'événements, est configuré pour commander les un ou plusieurs dispositifs de présentation (52) de manière à fournir une rétroaction tactile donnant une indication de rétroaction tactile différente en fonction de l'événement ou des événements qui sont sélectionnés comme ledit sous-ensemble d'événements.

9. Système robotisé industriel selon l'une quelconque des revendications 6-8, dans lequel la série d'événements est stockée dans le dispositif de commande d'opérateur (4) et/ou dans l'unité de commande robotisée (2) et les événements sont sélectionnables par l'intermédiaire de l'interface utilisateur respective (28 ; 48).

10. Système robotisé industriel selon l'une quelconque des revendications 6-9, dans lequel l'interface utilisateur (28 ; 48) est configurée pour sélectionner une indication de rétroaction tactile dédiée pour chaque événement dans le sous-ensemble sélectionné d'événements.

11. Dispositif de commande d'opérateur portable (4) permettant de programmer et/ou d'instruire et/ou d'opérer manuellement au moins un manipulateur (1) dans un système robotisé industriel (6), lequel dispositif de commande d'opérateur est conçu pour une communication réciproque avec une unité de commande robotisée (2) pour commander ledit manipulateur, et comporte au moins un dispositif de présentation (52) destiné à fournir une rétroaction tactile à un utilisateur lorsqu'il est en contact physique avec le dispositif de commande d'opérateur (4),
**caractérisé en ce que** le dispositif de commande d'opérateur est configuré pour donner une indication de rétroaction tactile lors de l'apparition d'un ou plusieurs événements appartenant à un sous-ensemble d'événements sélectionnables à partir d'une série d'événements, laquelle série d'événements comportant : un ou plusieurs événements associés aux mouvements dudit manipulateur (1), et/ou un ou plusieurs événements associés aux mouvements du dispositif de commande d'opérateur, et/ou un ou plusieurs événements associés à un programme pour ledit manipulateur, et/ou un ou plusieurs événements associés à l'avance ou à la programmation dudit manipulateur, tous les événements de la série d'événements pouvant fournir une rétroaction tactile, et **en ce qu'**il comprend une interface utilisateur (48) configurée pour sélectionner un sous-ensemble d'événements qui donnent lieu à une indication de rétroaction tactile dans le dispositif de commande d'opérateur, à partir de ladite série d'événements, et **en ce que** ledit dispositif de présentation (52) destiné à fournir une rétroaction tactile peut donner différentes indications de rétroaction tactile pour différents événements.

12. Dispositif de commande d'opérateur portable selon la revendication 11, comprenant une pluralité de dispositifs de présentation (52) destinés à fournir une rétroaction tactile afin de pouvoir donner différentes indications de rétroaction tactile pour différents événements.

13. Dispositif de commande d'opérateur portable selon la revendication 11 ou 12, comprenant un processeur (40) configuré pour commander les un ou plusieurs dispositifs de présentation (52) afin de fournir une rétroaction tactile donnant une indication de rétroaction tactile différente en fonction de l'événement ou des événements qui sont sélectionnés comme ledit sous-ensemble d'événements.

14. Dispositif de commande d'opérateur portable selon l'une quelconque des revendications 11-13, configuré pour être commandé par l'unité de commande robotisée (2) afin de commander les un ou plusieurs dispositifs de présentation (52) de manière à fournir une rétroaction tactile donnant une indication de rétroaction tactile différente en fonction de l'événement ou des événements qui sont sélectionnés comme ledit sous-ensemble d'événements.

15. Dispositif de commande d'opérateur portable selon l'une quelconque des revendications 11-13, dans lequel la série d'événements est stockée dans le dispositif de commande d'opérateur (4) et les événements sont sélectionnables par l'intermédiaire de l'interface utilisateur (48).

16. Dispositif de commande d'opérateur portable selon l'une quelconque des revendications 11-15, dans lequel l'interface utilisateur est configurée pour sélectionner une indication de rétroaction tactile dédiée pour chaque événement dans le sous-ensemble sélectionné d'événements.

17. Produit programme d'ordinateur comprenant des instructions devant être exécutées par un processeur pour commander un système robotisé industriel selon le procédé de l'une quelconque des revendications 1-5.
